# EUROPÄISCHE PATENTSCHRIFT

(11) **EP 4 287 815 B1**
(45) Veröffentlichungstag und Bekanntmachung des Hinweises auf die Patenterteilung: **04.12.2024**
(21) Anmeldenummer: 22710290.2
(22) Anmeldetag: 26.01.2022
(51) Int. Cl.: A01B 5/14, A01B 15/16, A01B 15/04

(54) **WENDE-PFLUGVORRICHTUNG**
ROTATABLE PLOUGH
CHARRUE RÉVERSIBLE

(30) Priorität: 03.02.2021 DE 102021200973
(43) Veröffentlichungstag der Anmeldung: 13.12.2023
(73) Patentinhaber: Huber Soil Solution GmbH, 8435 Wagna (AT)
(72) Erfinder: HUBER, Franz-Ferdinand, 8435 Wagna (AT)
(74) Vertreter: Leske, Thomas
(86) Internationale Anmeldenummer: PCT/EP2022/051718
(87) Internationale Veröffentlichungsnummer: WO 2022/167281

(56) Entgegenhaltungen:
- EP-A1- 0 820 687
- CN-U- 208 143 733
- DE-B3- 102019 217 245
- JP-A- 2000 023 501

## Beschreibung

Die Erfindung betrifft eine Wende-Pflugvorrichtung mit zum Pflugbaum einseitiger Anordnung von aus einem hohlscheibenartigen ersten Schneidelement und einem messerartigen zweiten Schneidelement bestehenden Pflugmodulen. Derartige Scheibenpflüge mit zwei Schneidelementen sind bekannt.

In DE 10 2017 102 683 B3 ist eine Pflugvorrichtung zum Pflügen eines Bodens bekannt, bei welcher eine Trägerstruktur, ein rotierbares erstes Schneidelement, welches an der Trägerstruktur angeordnet ist und beim Bewegen der Pflugvorrichtung und damit der Trägerstruktur entlang einer Pflügrichtung einen Seitenbereich eines Erdbalkens des Bodens schneidet, und ein zweites Schneidelement vorgesehen sind, das ebenfalls an der Trägerstruktur angeordnet ist und welches die Sohle bzw. den Bodenbereich eines Erdbalkens schneidet. Bei dieser bekannten Pflugvorrichtung läuft das zweite Schneidelement vor dem ersten Schneidelement. Dabei ist das zweite Schneidelement als ebene rotierbare Scheibe ausgebildet, welche die Sohle des Erdbalkens schneidet und nach welcher an der Trägerstruktur der Pflugvorrichtung eine hohlscheibenartige zweite Scheibe angeordnet ist, welche das Schneiden des Seitenbereiches des Erdbalkens und dessen Umwenden gleichermaßen realisiert. Das Umwenden wird durch ein nach dem ersten Schneidelement angeordnetes Streichblech noch unterstützt. Der Vorteil derartiger Scheibenpflüge besteht darin, dass die Zugkraft für einen derartigen Pflug deutlich geringer ist als bei herkömmlichen Streichpflügen, sodass zum Teil erhebliche Kraftstoffeinsparungen erzielt werden können. Will man beim Pflügen großer Ackerflächen beispielsweise keinen Damm oder keinen ungepflügten Bereich belassen, wird in der Regel so gepflügt, dass nach erfolgtem Pflügen in eine Richtung an der Stelle gewendet wird und unmittelbar neben dieser Pflügfurche sich die rückwärtige Pflügfurche anschließt. Der Erdbalken muss dabei so gewendet werden, dass er dieselbe Richtung wie die Hinfurche hat. Dies ist mit einem einreihigen Beetpflug nicht realisierbar. Für die geschilderten Aufgaben werden daher sogenannte Wendepflüge eingesetzt, welche beidseitig eines Pflugbaumes Pflugelemente aufweisen, mittels welchen ein Erdbalken herausgetrennt und gewendet werden kann. Dazu weist ein derartiger Wendepflug eine doppelreihige Bestückung auf, was bedeutet, dass auf jeder Seite des Pflugbaumes zumindest eine, vorzugsweise mehrere zu einer Kombination zusammengefassten Pflugmodule angeordnet sind, welche aus jeweils zwei Schneidelementen bestehen. Wenn für größere Ackerflächen in der beschriebenen Art und Weise gepflügt werden soll, müssen die Wendepflüge daher mit einer Reihe der Module pflügen und für die Rückfurche den Pflug um 180° wenden und mit der gewendeten Position die Rückfurche pflügen. Das bedeutet jedoch, dass die Pflüge immer nur mit einer Hälfte der vorhandenen Module arbeiten können, eine Hälfte immer sozusagen leer mitgezogen werden muss. Das erhöht einerseits den Bauaufwand für einen Pflug und andererseits auch die zu bewegenden Massen und damit die Zugkraft und damit den Kraftstoffverbrauch. Ein weiterer Nachteil dieser bekannten Pflugvorrichtung besteht darin, dass die jeweils für die Pflugaufgabe zusammengehörigen zwei Schneidelemente jeweils einzeln an einer Trägerstruktur am Pflugbaum befestigt sind, sodass deren Einstellung zueinander mit einem relativ großen Aufwand verbunden ist.

In DE 10 2019 204 256 A1 ist ein Pflugmodul bzw. eine Pflugvorrichtung mit derartigen Pflugmodulen beschrieben, bei welcher jeweils ein hohlscheibenartig ausgebildetes erstes Schneidelement und ein in Pflügrichtung dazu nachfolgendes ebenes zweites Schneidelement vorgesehen sind. Mit dem ersten Schneidelement wird ein Seitenbereich eines Erdbalkens und mit dem zweiten Schneidelement ein Bodenbereich eines Erdbalkens geschnitten. Beide Schneidelemente in Form von jeweils einem tellerartigen Schneidelement sind in einer Trägerstruktur miteinander verbunden, können über diese Trägerstruktur bezüglich ihrer Winkel zueinander und bezüglich der Winkel zu dem zu schneidenden Erdbalken eingestellt werden. Da beide Schneidelement an einer Trägerstruktur angebracht sind und diese Trägerstruktur am Pflugbaum angebracht ist, kann im Falle sich ändernder Bodenbedingungen oder im Falle von Beschädigungen während des Pflügens ein derartiges Pflugmodul rasch vom Pflugbaum gelöst und durch ein neues ersetzt werden, sodass selbst bei beschädigten Schneidelementen ohne lange Pausen die gesamte Pflugvorrichtung rasch wieder zum Pflügen verwendet werden kann. Anstelle des scheibenförmigen zweiten Schneidelementes kann dafür auch ein abgewinkeltes Messer vorhanden sein, dass entsprechend seiner Anstellung eine entsprechende Kraft in die zu pflügende Erde hinein oder aus dieser heraus bezüglich des Anstellwinkels bewegt werden kann. Bei der Verwendung eines Wendepfluges müssen die Module nun so an beiden Seiten des Pflugbaumes angebracht werden, dass bei 180° Wenden des Pflugbaumes die Module so in Eingriffsstellung zum Boden gebracht werden, dass bei der Rückfurche das Wenden des Erdbalkens in derselben Richtung erfolgt wie bei der Hinfurche vor dem Wenden des Wendepfluges aus der ersten in die zweite Position.

Des Weiteren ist aus DE 10 2019 217 245 B3 ein Pflugmodul mit einer Lochplatte bekannt, welches sowohl ein erstes, hohlscheibenartig ausgebildetes Schneidelement zum Schneiden eines Seitenbereiches eines Erdbalkens als auch ein messerartig ausgebildetes zweites Schneidelement zum Schneiden einer Furchensohle eines Bodenbereiches aufweist. Mittels der Lochplatte können die jeweiligen Schneidelemente auf unterschiedliche Böden, unterschiedliche Pflügtiefen wie auch auf unterschiedliche Bodenarten eingestellt werden. Auch bei dieser bekannten Pflugvorrichtung ist eine doppelreihige Anordnung der Pflugmodule an einem Pflugbaum vorgesehen, damit zu pflügende Furchen unmittelbar nebeneinander und nach dem Wenden des Erdbalkens in derselben Art und Weise wie die Hinfahrt bei der Rückfahrt der gewendete Erdbalken abgelegt werden kann.

Weiterhin ist aus der EP 0 820 687 A1 eine Wende-Pflugvorrichtung bekannt, mit beidseitig eines Pflugbaumes angeordneten und als Pflugschar ausgebildeten Schneidelementen. Einseitig hohlscheibenartig ausgebildete weitere Schneidelemente sind aus einer ersten Position auf einer ersten Seite des Pflugbaumes in eine zweite Position auf einer der ersten Seite des Pflugbaumes gegenüberliegenden zweiten Seite mittels eines Schwenkarmes schwenkbar.

Gegenüber den bekannten Scheibenpflügen mit zwei Schneidelementen besteht die Aufgabe der vorliegenden Erfindung darin, eine Wende-Pflugvorrichtung bereitzustellen, die die Vorteile eines Beetpfluges mit einreihiger Scheibenbestückung auf die Funktionalität eines Wendepfluges überträgt.

Diese Aufgabe wird mit einer Wende-Pflugvorrichtung mit den Merkmalen gemäß Anspruch 1 gelöst. Zweckmäßige Weiterbildungen sind in den abhängigen Ansprüchen definiert.

Erfindungsgemäß weist die Wende-Pflugvorrichtung beidseitig eines Pflugbaumes angeordnete messerartige Schneidelemente auf. Diese werden auch als Unterschneidewerkzeuge bzw. Winkelmesser bezeichnet und sind am Pflugbaum fest montiert, und zwar auf beiden Seiten des Pflugbaumes, also 180° zueinander angeordnet. Diese messerartigen Schneidelemente sind variabel hinsichtlich beispielsweise ihres Anstellwinkels einstellbar. Die Einstellbarkeit kann vorzugsweise hydraulisch, insbesondere vom Fahrersitz aus, gesteuert werden. Durch den Anstellwinkel ergibt sich eine Tiefeneinzugsregelung, was vorzugsweise über hydraulische Stellglieder erfolgt. Über den Anstellwinkel dieser messerartigen Schneidelemente wird die Kraft letztlich definiert, mit welcher die Pflugvorrichtung in den Boden gezogen wird, mithin die Pflügtiefe eingestellt. Erfindungsgemäß ist nun zumindest ein einseitiges, bezogen auf den Pflugbaum, hohlscheibenartig ausgebildetes erstes Schneidelement vorgesehen, welches aus einer ersten Position auf einer ersten Seite des Pflugbaumes, in welcher das erste Schneidelement bezüglich der messerartigen zweiten Schneidelemente so angeordnet ist, dass jeweils ein zweites Schneidelement und das erste Schneidelement in der ersten Position zusammen ein Komplettmodul zum Pflügen in einer Pflügrichtung bilden. Das hohlscheibenartig ausgebildete erste Schneidelement ist nun in eine zweite Position auf einer der ersten Seite des Pflugbaumes gegenüberliegenden zweiten Seite mittels eines Schwenkarmes schwenkbar. Wenn das erste Schneidelement aus der ersten Position in die zweite Position geschwenkt wird, so bildet das in der zweiten Position angeordnete, sozusagen ein Halbmodul darstellende, zweite Schneidelement mit dem ersten Schneidelement zusammen wieder ein Komplettmodul.

Der wesentliche Kern der Erfindung besteht darin, dass beidseitig, d.h. 180° am Pflugbaum gegenüberliegend, die messerartigen zweiten Schneidelemente angeordnet sind und das erste Schneidelement aus der ersten Position in die dazu gegenüberliegende, zweite Position schwenkbar ist. Immer, wenn sich das erste Schneidelement in einer der Positionen, d.h. der ersten Position oder der zweiten Position befindet, bildet das erste Schneidelement zusammen mit dem jeweiligen zweiten Schneidelement jeweils ein Komplettmodul, bestehend aus dem ersten Schneidelement, welches hohlscheibenartig ausgebildet ist, und dem zweiten Schneidelement, welches vorzugsweise messerartig ausgebildet ist. Wenn das erste Schneidelement zur ersten Position geschwenkt ist, dann kann das dort dann vorhandene Komplettmodul zum Pflügen des Erdbodens in einer ersten Richtung verwendet werden. Am Ende der Furche kann das Zugfahrzeug wenden und unmittelbar neben dieser Furche in die Richtung zurück die zweite Furche ziehen. Dazu ist es lediglich erforderlich, dass das erste Schneidelement aus der ersten Position in die zweite Position verschwenkt wird, sodass bei der Furche in entgegengesetzter Richtung mit gleichem Sturz- und Anstellwinkel des ersten, hohlscheibenartig ausgebildeten Schneidelements gepflügt werden kann. Damit ist es möglich, einen halbreihigen, quasi einen Beetpflug darstellenden Pflug, durch Umschwenken des ersten Schneidelementes aus der ersten Position in die zweite Position zu einer Wende-Pflugvorrichtung zu machen.

Gegenüber einem herkömmlichen Wendepflug, bei welchem eine Reihe von Pflugmodulen stets leer mittransportiert werden muss, während die erste Furche gezogen wird, wird also zumindest ein hohlscheibenartig ausgebildetes erstes Schneidelement eingespart. Die Einsparung ist umso größer, je mehr Pflugmodule am Pflugbaum befestigt sind. Damit wird ein erheblicher Aufwand für die Wende-Pflugvorrichtung gegenüber einer herkömmlichen derartigen Vorrichtung eingespart. Wegen der geringeren Masse wird auch Zugkraft und damit Kraftstoff vom Zugfahrzeug eingespart. Das Schwenken des ersten Schneidelementes aus der ersten Position in die zweite Position und umgekehrt erfolgt über einen Schwenkarm. Die hohlscheibenartig ausgebildeten ersten Schneidelemente sind am Pflugbaum über entsprechende Schwenkachsen mit einem Schwenkarm verbunden, welcher vertikal drehbar bzw. schwenkbar am Pflugbaum gelagert ist. Die Schwenkachsen sind am Pflugbaum vorzugsweise derart angeordnet, dass der Schwenkarm in einem vorgegebenen Bereich vertikal schwenkbar ist. Durch das Kombinieren eines zweiten Schneidelementes oder einer Reihe zweiter Schneidelemente wird jeweils ein Komplettmodul geschaffen. Die hohlscheibenartig ausgebildeten ersten Schneidelemente beschreiben zusammen mit dem Schwenkarmmechanismus auf ihrer Schwenkbahn eine definierte Bahn und werden in der Endstellung, d.h. in der jeweiligen ersten oder zweiten Position, mit dem Unterschneidewerkzeug zu einer funktionellen Modulbaugruppe zusammengeführt.

Vorzugsweise sind bei einer Anordnung von mehreren hohlscheibenartigen ersten Schneidelementen diese über ein Gestänge miteinander verbunden und gleichzeitig mittels des jeweiligen Schwenkarmes von der ersten in die zweite Position schwenkbar.

Es ist jedoch auch möglich, dass mehrere hohlscheibenartige erste Schneidelemente mittels jeweiliger Hydraulikzylinder von der ersten in die zweite Position einzeln winkelgleich schwenkbar sind. Dabei ist der Schnittwinkel für die hohlscheibenartig ausgebildeten ersten Schneidelemente in einer waagerechten Position, und zwar parallel zum Pflugbaum, eingestellt. Der Sturzwinkel dagegen stellt sich im Zuge des Schwenkvorganges über den Schwenkbereich, zum Beispiel im Bereich von 0° bis 80°, bezogen auf die waagerechte Ausgangsstellung komplementär dazu ein. Die Arbeitsposition für Schnitt- und Sturzwinkel wird dadurch ohne Nachkorrektur des hohlscheibenartigen Schneidelementes (Sturzwinkel) erreicht, ohne dass eine zusätzliche Schwenkachse für das Einstellen dieser Winkel erforderlich wäre.

Vorzugsweise ist das erste Schneidelement zum Schneiden eines Seitenbereiches eines Erdbalkens vom Boden vorgesehen, während das zweite Schneidelement den Bodenbereich des Erdbalkens, d.h. dessen Sohle, in Pflügrichtung schneidet. Vorzugsweise hat das erste Schneidelement sowohl nach dem Schwenken in die erste Position wie auch nach dem Schwenken in die zweite Position jeweils den gleichen Schnitt- und Sturzwinkel im Vergleich zur vorherigen Position. Zum Wenden der Wende-Pflugvorrichtung wird der Pflugbaum um 180° um ein Pflugturmdrehwerk gedreht. Beim Schwenken verändert sich der Sturzwinkel kontinuierlich. Bei einem Schwenken des Schwenkarms aus der ersten in die zweite Position oder umgekehrt können Sturzwinkel und Schnittwinkel gleich groß sein, beispielsweise ca. 77°, insbesondere 77,3°. Wenn beispielsweise die Schwenkarm-Position von 77,3° noch nicht erreicht ist, so ergibt sich ein größerer Schnittwinkel, und bei einer Schwenkung um mehr als 77,3° wird der Sturzwinkel größer. Innerhalb des Schwenkbereichs des Schwenkarms von 0° in Richtung auf 90° erfährt das hohlscheibenartig ausgebildete erste Schneidelement quasi eine Drehung im Raum gegenüber der Schwenkebene. Im Zuge der Schwenkbewegung werden also kontinuierlich Schnitt- und Sturzwinkel der beiden Schneidelemente gegenüber der Zuglinie des Schleppers bzw. der Furchenwand geändert. Damit ist es vorzugsweise möglich, eine gewünschte Bodenbearbeitungsintensität zu regulieren. Wenn beispielsweise der Boden mehr geschnitten werden soll (Anschnitt) oder mehr gewendet werden soll, so ist dies je nach Stellung des Schwenkarms möglich. Es versteht sich, dass die Schwenkarme für die hohlscheibenartig ausgebildeten ersten Schneidelemente in einer gewünschten Position verriegelbar sind.

Vorzugsweise sind die messerartig ausgebildeten zweiten Schneidelemente sowohl am Pflugbaum beispielsweise mittels einer Lochplatte als auch hinsichtlich ihres Anstellwinkels zur Tiefeneinzugssteuerung mittels hydraulischer Stellglieder einstellbar. Unabhängig davon sind die messerartigen zweiten Schneidelemente am Pflugbaum befestigt.

Weiter vorzugsweise sind die messerartigen zweiten Schneidelemente am Pflugbaum und hinsichtlich ihres Anstellwinkels zur Tiefeneinzugssteuerung mechanisch einstellbar, und zwar vorzugsweise über eine Lochplatte mit Scherbolzen. Über die Lochplattenbreite kann gleichzeitig vorzugsweise die Nachlaufstabilität verbessert werden. Die neigungsverstellbare Lochplatte ist über die Lochung einstellbar, d.h. der Tiefeneinzug ist darüber einstellbar. Mit der einfachen Verriegelung über einen Scherbolzen kann zusätzlich eine Steinsicherung realisiert werden.

Vorzugsweise sind die Schwenkelemente in einer ersten Schwenkrichtung um 270° bis 300° um die Schwenkachse oder in einer zur ersten Schwenkrichtung entgegengesetzten zweiten Schwenkrichtung um 80° bis 100° verschwenkbar, wobei die Schwenkachse 90° zur Zuglinie der Pflugvorrichtung angeordnet ist. Vorzugsweise sind die hohlscheibenartigen ersten Schneidelemente in einer Ebene verschwenkbar, was vorzugsweise über einen Schwenkhebel erreichbar ist, welcher gleichzeitig zur Verriegelung in der Endposition, d.h. der ersten Position oder der zweiten Position, fixierbar ist.

Gemäß einer weiteren bevorzugten Ausführungsform ist nur hinter jedem zweiten der ersten Schneidelemente ein zweites Schneidelement angeordnet. Das spart ebenfalls Kosten, da die Gesamtkonstruktion der erfindungsgemäßen Wende-Pflugvorrichtung einfacher im Aufbau mit weniger Bauelementen wird.

Mit der erfindungsgemäßen Wende-Pflugvorrichtung ist es somit möglich, dass beim Pflügen der unerwünschte sogenannte Zusammenschlag, welcher begrifflich für Dammbildung steht, oder Auseinanderschlag, welcher das Leerfurchen kennzeichnet, eines Beetpfluges vermieden werden kann. Der erfindungsgemäße Wendepflug, welcher auch als Drehpflug bezeichnet werden kann, ist zur Vermeidung von Zusammenschlag und Auseinanderschlag vor allen Dingen entwickelt worden. Allerdings besteht der Nachteil dieses Wendepfluges darin, dass eine Doppelbestückung, nämlich zu beiden Seiten des Pflugbaumes, der messerartigen zweiten Schneidelemente erforderlich ist.

Der Kern der vorliegenden Erfindung, d.h. der Wende-Pflugvorrichtung, besteht nun darin, dass eine Doppelbestückung mit Komplettmodulen nicht erforderlich ist; doppelbestückt sind lediglich die messerartig ausgebildeten zweiten Schneidelemente. Aufgrund der Tatsache, dass die hohlscheibenartigen ersten Schneidelemente zwischen der ersten Position, der ersten Seite des Pflugbaumes, an welcher die messerartigen zweiten Schneidelemente angeordnet sind, in die zweite Position, 180° entgegengesetzt zu der ersten Position, geschwenkt werden können und in der jeweiligen Position ein Komplettmodul zusammen mit den messerartigen zweiten Schneidelementen bilden, ist es möglich, den Zusammenschlag wie auch den Auseinanderschlag zu vermeiden, ohne dass Komplettmodule zu beiden Seiten des Pflugbaumes erforderlich sind.

Bei Erreichen des Vorackers am Ende eines zu pflügendes Feldes befindet sich die Pflugvorrichtung noch in Arbeitsposition mit exakt für diesen Pflug eingestelltem Schnitt- und Sturzwinkel. Am Ende des Feldes am Ende der Furche wird die Pflugvorrichtung hydraulisch aus der Furche gehoben und danach über das mit einer Königswelle ausgestattete Drehwerk um die horizontale Achse um 180° gedreht. Dabei wird die Scheibenreihe, d.h. die hohlscheibenartigen ersten Schneidelemente, auf die Gegenseite, d.h. nach oben, geschwenkt. Danach werden die Scheiben hydraulisch oder über einen Koppelstangenmechanismus wieder gleichlaufend in die Arbeitsposition geschwenkt, sodass für die Rückfahrt gleiche Winkelbedingungen für Sturz und Schnitt herrschen, sodass weder Dammbildung noch Leerfurchen entstehen. Das bedeutet, dass das System auf einfache Art und Weise gespiegelt wird und Schnitt- und Sturzwinkeleinstellungen erhalten bleiben. Nach dem entsprechenden Schwenkvorgang wird auf der gegenüberliegenden Seite wieder ein Komplettmodul hergestellt, wobei nach erfolgtem Schwenkvorgang die hohlscheibenartigen ersten Schneidelemente in der dann vorliegenden Arbeitsposition verriegelt sind. Die Sturz- und Schnittwinkel sind dann wieder identisch zu denen für die Hinfahrt.

Diese erfindungsgemäße neuartige Kinematik ermöglicht es auf einfache Weise, aus einem Beetpflug mit einreihiger Scheibenbestückung die Funktionalität eines Wendepfluges herzustellen.

Durch die zweiten Schneidelemente, die Unterschneidewerkzeuge, welche messerartig ausgebildet sind, wird eine verbesserte mechanische Unkrautbekämpfung realisiert, was zur Verringerung des Einsatzes von chemischen Unkrautbekämpfungsmitteln führt. Die erfindungsgemäße Wende-Pflugvorrichtung führt des Weiteren zu einer besseren Bodenlockerung und einer besseren Durchmischung durch die rotierenden hohlscheibenförmig ausgebildeten ersten Schneidelemente, d.h. die Hohlscheiben. Da beim Pflügen der Bodenbedeckungsgrad regelbar ist, kann direkt auch positiver Einfluss auf den Wasserhaushalt und den Erosionsschutz genommen werden. Mehr Raum für die Bewurzelung der Pflanzen ergibt sich dadurch, dass mittels der erfindungsgemäßen Pflugvorrichtung ein sanftes Wenden mit Schaffung höheren Porenvolumens möglich ist. Die gegenüber herkömmlichen Streichpflügen verbesserte Leichtzügigkeit führt zur Kraftstoffeinsparung und damit auch zur CO₂ Reduzierung, was insgesamt der ökologischen Nachhaltigkeit dient und eine Ertragssteigerung und Bodenverbesserung insgesamt bewirkt.

Weitere Vorteile, Merkmale und Anwendungsmöglichkeiten der Erfindung werden nun anhand von Ausführungsbeispielen unter Bezugnahme auf die beigefügten Zeichnungen erläutert. In der Zeichnung zeigen:
- Figur 1: ein erstes Ausführungsbeispiel der erfindungsgemäßen Wende-Pflugvorrichtung mit über ein Gestänge schwenkbar verbundenen hohlscheibenförmigen Schneidelementen;
- Figur 2: ein zweites Ausführungsbeispiel mit einzeln über Hydraulikzylinder schwenkbar angeordneten hohlscheibenartigen Schneidelementen;
- Figur 3: eine Seitenansicht des Ausführungsbeispiels gemäß Figur 1 mit Verschwenkung der hohlscheibenförmigen Schneidelemente aus ihrer erste Position in die zweite Position;
- Figur 4: eine prinzipielle Darstellung eines mittels eines Hydraulikzylinders am Pflugbaum verschwenkbar angeordneten hohlscheibenartigen Schneidelementes;
- Figur 5: eine prinzipielle Anordnung des hohlscheibenartigen Schneidelementes gemäß Figur 4, jedoch mit zur Verschwenkung ausgefahrenem Hydraulikzylinder;
- Figur 6: eine prinzipielle dreidimensionale Darstellung des Ausführungsbeispiels nach Figur 2, jedoch mit zur Vereinfachung der Darstellung weggelassenen ersten Schneidelementen;
- Figur 7: eine prinzipielle Darstellung der Anordnung des hohlscheibenartigen Schneidelementes mit Verstellung über einen Hydraulikzylinder und mit über eine Lochplatte einstellbarem Schnittwinkel;
- Figur 8a),b),c): die prinzipielle Darstellung des Ausführungsbeispiels gemäß Figur 2 in drei Ansichten mit verschiedenen Phasen der mittels Hydraulikzylinder erfolgenden Verschwenkung der hohlscheibenartigen Schneidelemente bei in der Zeichnung weggelassenen zweiten Schneidelementen;
- Figur 9: eine Ansicht der erfindungsgemäßen Wende-Pflugvorrichtung mit Blickrichtung in Richtung der Zuglinie bei Verschwenkungsmöglichkeit der hohlscheibenartigen Schneidelemente gemäß erstem Ausführungsbeispiel bei in der Zeichnung weggelassenen zweiten Schneidelementen;
- Figur 10a): zwei Ansichten eines hohlscheibenartigen Schneidelementes gemäß Ausführungsbeispiel nach Figur 2 in seiner Arbeitsposition in Seitenansicht und in Draufsicht;
- Figur 10b): ein hohlscheibenartiges Schneidelement gemäß zweitem Ausführungsbeispiel in Neutralposition;
- Figur 11: ein weiteres Ausführungsbeispiel mit zwei hohlscheibenartigen Schneidelementen in Hintereinander-Anordnung, welchen ein einziges erstes Schneidelement zugeordnet ist; und
- Figur 12: eine handelsüblich verfügbare Gänsefußschar, welche anstelle des in Figur 11 gezeichneten zweiten Schneidelements mit in zwei Richtungen sich erstreckenden Schneidmessern vorgesehen ist.

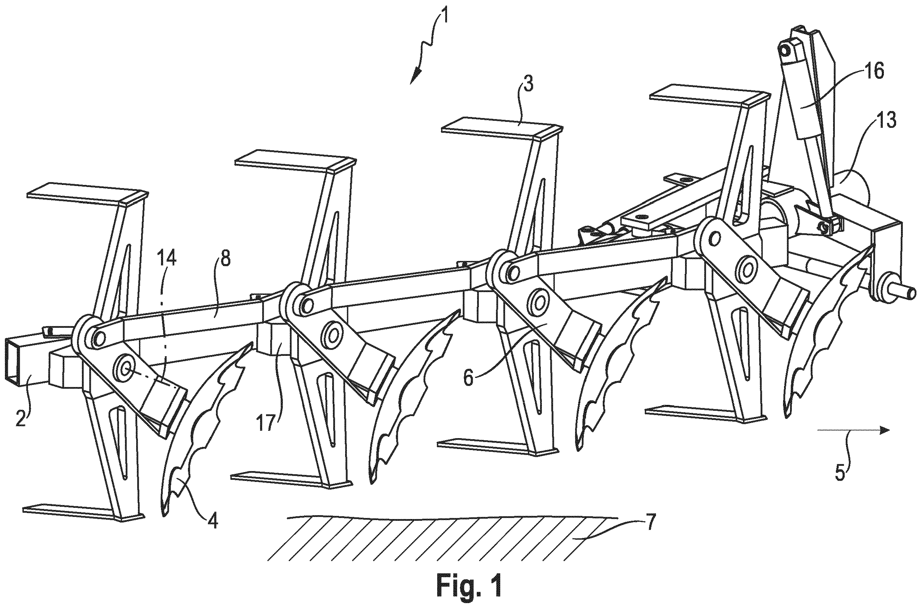

In Figur 1 ist eine erfindungsgemäße Wende-Pflugvorrichtung 1 gemäß einem ersten Ausführungsbeispiel gezeigt. Am Pflugbaum 2 sind beidseitig, d.h. nach oben und nach unten gerichtet, vier messerartige zweite Schneidelemente 3 vorgesehen, welche auch als Halbmodule bezeichnet werden, da ihnen nicht permanent ein zweites Schneidelement 4 zugeordnet ist.

Die Wende-Pflugvorrichtung 1 ist über ein Pflugturmdrehwerk 13 mit einem Zugfahrzeug verbunden und wird von diesem in der Pflügrichtung 5, angedeutet durch den Pfeil in der Zeichnung unterhalb des Pflugturmdrehwerks 13, gezogen. Von diesem wird auch das Gestänge 8 angetrieben, welches bei einer Zug- oder Schiebeverstellung das hohlscheibenartige erste Schneidelement 4 mittels eines Schwenkarmes 6 um eine Schwenkachse 14 aus einer ersten Position, welche in dem dargestellten Beispiel die Arbeitsposition der Wende-Pflugvorrichtung 1 ist, in eine zweite, nicht dargestellte Position verschwenkt. In der ersten Position macht also das hohlscheibenartige erste Schneidelement 4 ein jeweiliges messerartiges zweites Schneidelement 3 aus einem Halbmodul zu einem Komplettmodul. Wenn durch Verschieben des Gestänges 8 der Schwenkarm 6 um die Schwenkachse 14 das hohlscheibenartige erste Schneidelement 4 in die zweite Position schwenkt, dann wird gemäß Darstellung in der Figur 1 das jeweilige obere messerartige zweite Schneidelement 3 zusammen mit dem in die zweite Position verschwenkten hohlscheibenartigen ersten Schneidelement 4 von einem Halbmodul ebenfalls zu einem Komplettmodul.

Das bedeutet, dass die erfindungsgemäße Wende-Pflugvorrichtung 1 im Gegensatz zu einem normalen Wendepflug mit zu beiden Seiten des Pflugbaumes sich erstreckenden Komplettmodulen nur eine einfache Anordnung von hohlscheibenartigen ersten Schneidelementen 4 aufweist, welche immer zu der Reihe von messerartigen zweiten Schneidelementen 3 geschwenkt wird, welche gerade zum Pflügen vorgesehen ist. Damit entfällt die doppelreihige Anordnung zu beiden Seiten des Pflugbaumes 2 von ersten und zweiten Schneidelementen 3,4, welche bei einem herkömmlichen Wendepflug üblich ist. Damit kann erhebliches Material und erhebliches Gewicht der erfindungsgemäßen Wende-Pflugvorrichtung 1 gegenüber herkömmlichen Pflügen eingespart werden, sodass auch aus diesem Grunde ein leichterer Pflug eine geringere Zugkraft benötigt. Damit ist auch eine weitere Kraftstoffeinsparung und auch CO₂-Einsparung verbunden. Die gesamte ökologische Bilanz eines derartigen Pfluges ist daher noch einmal deutlich verbessert gegenüber herkömmlichen Wendepflügen, erst recht gegenüber herkömmlichen Streichpflügen.

Die in Figur 1 dargestellte Wende-Pflugvorrichtung 1 ist in einer Position gezeigt, noch oberhalb des zu pflügenden Erdbodens 7, welcher prinzipiell angedeutet ist. Der Pflugbaum 2 ist in Zugrichtung um einen sogenannten Holmwinkel aus der Zuglinie herausgeschwenkt. Der jeweilige Schwenkarm 6 für das jeweilige hohlscheibenartige erste Schneidelement 4 ist am Pflugbaum 2 mittels eines Lagerblockes 27 gelagert, welcher mittels einer schiefen Ebene versehen ist, sodass das hohlscheibenartige erste Schneidelement 4 jeweils winkelmäßig optimal zur Zuglinie eingestellt ist. Zur Ausführung des Wendens der Wende-Pflugvorrichtung 1 ist am Pflugturmdrehwerk 13 ein Wende-Hydraulikzylinder 16 vorgesehen, mittels welchem die Pflugmodule um 180° gedreht werden, sodass die in Figur 1 dargestellte, an dem Pflugbaum 2 oben angeordnete Reihe von messerartigen zweiten Schneidelementen 3 nach unten auf den Erdboden 7 weisend geschwenkt werden kann, woran sich das Verschwenken der hohlscheibenartigen ersten Schneidelemente 4 zu den in Richtung auf den Boden 7 weisenden messerartigen zweiten Schneidelementen 3 über das Gestänge 8 anschließt.

Bei dem in Figur 1 gezeigten Ausführungsbeispiel sind die als Unterschneidewerkezeuge bezeichneten messerartigen zweiten Schneidelemente 3 fest montiert. Mittels nicht dargestellter Lochscheiben sind sie jedoch variabel einstellbar, um beispielsweise ihren Anstellwinkel und damit die Bodeneinzugskraft einstellen zu können, und zwar auch in Abhängigkeit von unterschiedlichen Bodenqualitäten.

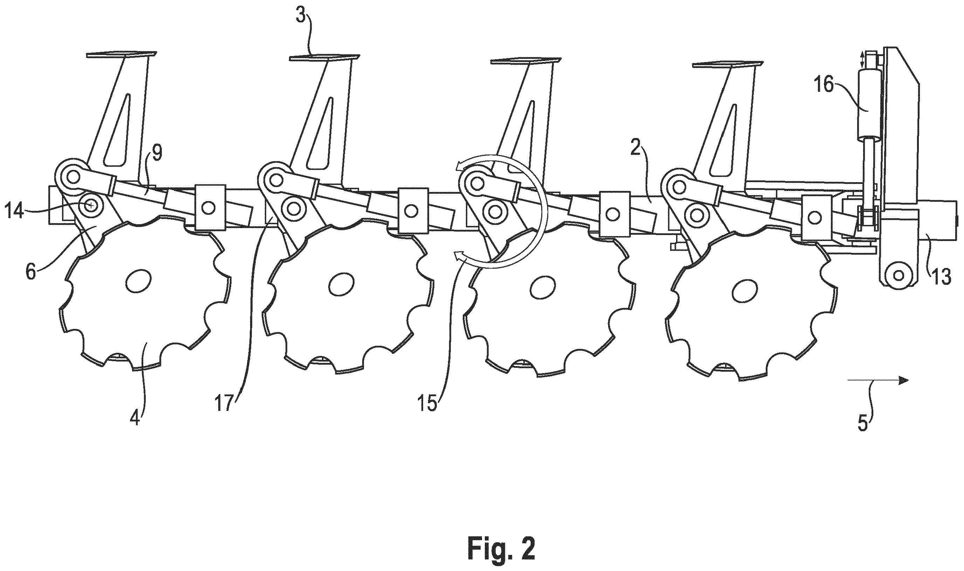

Figur 2 zeigt ein zweites Ausführungsbeispiel, das dem Grunde nach vom Aufbau her dem von Figur 1 entspricht, jedoch mit dem Unterschied, dass anstelle eines Gestänges bei dem Ausführungsbeispiel gemäß Figur 1 die Wende-Pflugvorrichtung 1 gemäß zweitem Ausführungsbeispiel nach Figur 2 für jedes einzelne hohlscheibenartige erste Schneidelement 4 jeweils ein Hydraulikzylinder 9 als Stellglied zu dessen Schwenken aus der ersten Position in die zweite Position vorgesehen ist. Aus der dargestellten ersten Position, welche gemäß Figur 2 die Arbeitsposition ist und in welcher das erste Schneidelement 4 zusammen mit dem zweiten Schneidelement 3 ein jeweiliges Komplettmodul bildet, wird in die zweite Arbeitsposition einzeln verschwenkt, sodass die in der Zeichnung dargestellte obere Reihe von zweiten Schneidelementen 3 zusammen mit dem ersten Schneidelement 4 wiederum Komplettmodule bildet, was durch Schwenken der Wende-Pflugvorrichtung 1 über das Pflugturmdrehwerk 13 mittels eines entsprechenden Wende-Hydraulikzylinders 16 in diese Arbeitsposition geschwenkt wird, wenn beispielsweise die Wende-Pflugvorrichtung 1 nach Ziehen einer Furche in Pflügrichtung 5 für die Furche in entgegengesetzter Richtung gewendet werden soll. Dieses Schwenken des hohlscheibenartigen ersten Schneidelementes 4 wird über die jeweiligen Hydraulikzylinder 9 im Rahmen des durch den kreisförmigen Doppelpfeil dargestellten Schwenkbereichs 15 realisiert. Die den jeweiligen ersten Schneidelementen 4 zugeordneten Hydraulikzylinder 9 können einzeln verschwenkt werden, müssen aber vor Beginn des Pflügens so aufeinander abgestimmt sein, dass sie mit gleich eingestellten Sturz- und Schnittwinkeln arbeiten. Vorzugsweise sind die einzelnen Hydraulikzylinder 9 daher bezüglich ihrer, die Verschwenkung des ersten Schneidelementes 4 realisierenden Funktion miteinander synchronisiert.

Die hohlscheibenartigen ersten Schneidelemente sind also über die jeweiligen Schwenkarme 6 vertikal drehbar gelagert. In einem vorgegebenen Bereich sind die Schwenkachsen am Pflugbaum 2 nun derart angeordnet, dass der Schwenkarm 6 vertikal verschwenkbar ist.

Damit beschreiben die hohlscheibenartigen ersten Schneidelemente 4 mit ihrem jeweiligen Schwenkarmmechanismus beim Schwenken eine definierte Schwenkbahn, wobei sie an einer definierten Position, d.h. der ersten Position bzw. der zweiten Position, bezüglich des Unterschneidewerkzeuges, d.h. des messerartigen zweiten Schneidelementes 3, zu einer funktionellen Modulbaugruppe, d.h. einem Komplettmodul, zusammengeführt sind. Die für die hohlscheibenartigen ersten Schneidelemente 4 erforderlichen Schnittwinkel 24 werden in einer waagerechten Position, einer sogenannten Neutralposition, parallel zum Pflugbaum 2 eingestellt. Der Sturzwinkel der jeweiligen hohlscheibenartigen ersten Schneidelemente 4 stellt sich im Zuge des Schwenkvorganges über den Schwenkbereich 15 von beispielsweise 0° bis 80°, und zwar bezogen auf die waagerechte Ausgangsstellung, komplementär dazu ein.

Ein wesentlicher Vorteil der Erfindung besteht dabei darin, dass die Arbeitsposition bezüglich des Schnitt- und Sturzwinkels ohne Nachkorrektur des Scheibenwinkes (Sturzwinkel) erreicht werden kann. Damit ist es möglich, auf eine zusätzliche Schwenkachse zum Einstellen korrekter Schnitt- und Sturzwinkel zu verzichten. Die anderen, mit den entsprechenden Bezugsziffern gekennzeichneten Bauelemente entsprechen ihrem Aufbau und ihrer Funktion nach denjenigen, welche in der Beschreibung zu Figur 1 bereits aufgeführt sind, sodass sie hier nicht wiederholt werden.

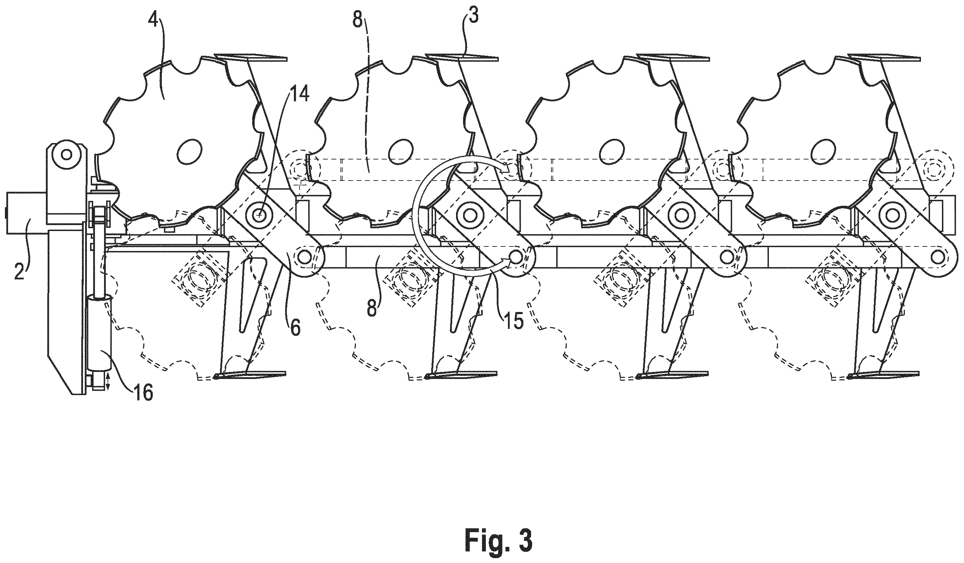

In Figur 3 ist das Ausführungsbeispiel gemäß Figur 1 dargestellt, bei welchem jedoch, ausgehend von der ersten Position, also einer ersten Arbeitsposition, über eine Verschwenkung um den Schwenkbereich 15 die hohlscheibenartigen ersten Schneidelemente 4 in die zweite Position verschwenkt sind, in welcher sie mit der zweiten, oberen Reihe von messerartigen zweiten Schneidelementen 3 in der dann dazu verschwenkten Position wieder ein jeweiliges Komplettmodul bilden. Die Verschwenkung in die zweite Position ist durch gestrichelt angedeutete Schwenkarme 6 gekennzeichnet. Auch das Gestänge 8 ist bei einer Verschwenkung des ersten Schneidelementes 4 in diese zweite Position ebenfalls gestrichelt dargestellt. Grundaufbau und Funktion entsprechen denen gemäß dem Ausführungsbeispiel nach Figur 1 und Figur 2, wobei gemäß Figur 2 anstelle des Gestänges ein jeweiliger Hydraulikzylinder 9 an jedem hohlscheibenartigen ersten Schneidelement 4 bzw. dessen Schwenkarm 6 angeordnet ist.

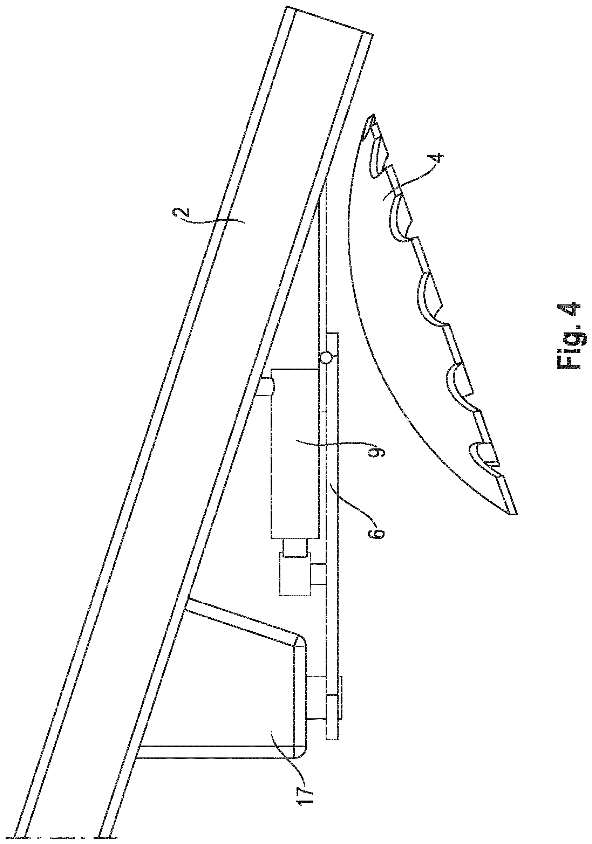

In Figur 4 ist ein Detail für die prinzipielle Anordnung des hohlscheibenartigen ersten Schneidelementes 4 mit der Neigung der Drehachse des ersten Schneidelementes bzw. der Auslenkung des Pflugbaumes 2 hinsichtlich der Zugrichtung dargestellt. Dazu weist die Lagerung für den Schwenkarm 6 zum Verschwenken des ersten Schneidelementes 4 aus der ersten Position in die zweite Position, d.h. aus einer ersten Arbeitsposition für eine Hinfurche in die zweite Arbeitsposition, einschließlich des Wendens der Wende-Pflugvorrichtung 1 für die Rückfurche verschwenkbar ist. Dazu weist der Lagerblock 17 die entsprechende Neigung des Pflugbaumes 2 von, wie dargestellt, ca. 20° auf. Die Verstellung des Schwenkarmes 6 zum Schwenken des ersten Schneidelementes 4 aus der ersten Position erfolgt mit dem Hydraulikzylinder 9. Der Schwenkarm 6 ist in seiner Längsausrichtung parallel zur Zugrichtung ausgerichtet, sodass bei Verschwenken des hohlscheibenartigen ersten Schneidelementes 4 dieses in einer Ebene bewegt wird, in welcher die Schwenkbewegung des Schwenkarmes 6 liegt.

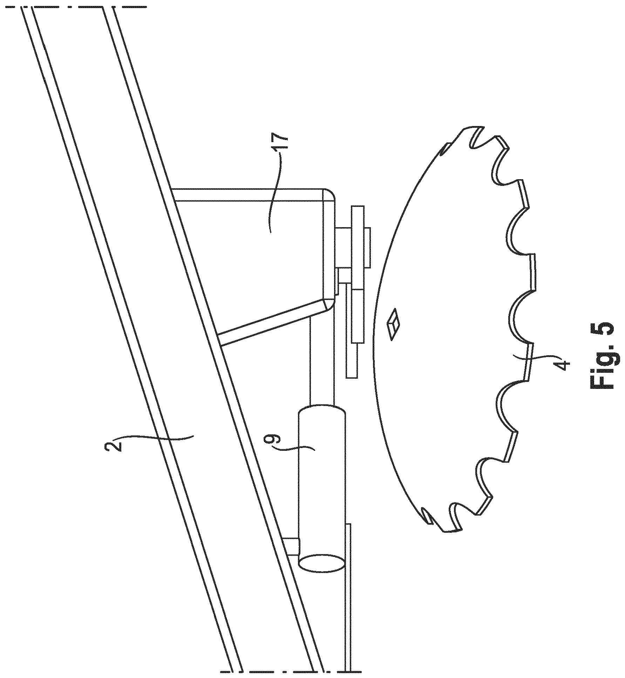

Figur 5 zeigt das Ausführungsbeispiel gemäß Figur 2, d.h. mit einem Hydraulikzylinder 9 zur Realisierung der Schwenkbewegung des hohlscheibenartigen ersten Schneidelementes 4. Dargestellt in Figur 5 ist, dass der Hydraulikzylinder 9 im Vergleich zu der Darstellung gemäß Figur 4 ausgefahren ist, d.h. dass das erste Schneidelement 4 in die zur ersten Arbeitsposition gegenüberliegende zweite Arbeitsposition verschwenkt worden ist. Zusätzlich ist in Figur 5 dargestellt, dass das hohlscheibenartige erste Schneidelement 4 nicht nur einen definierten Schnittwinkel aufweist, sondern auch auf einen definierten Sturzwinkel eingestellt ist.

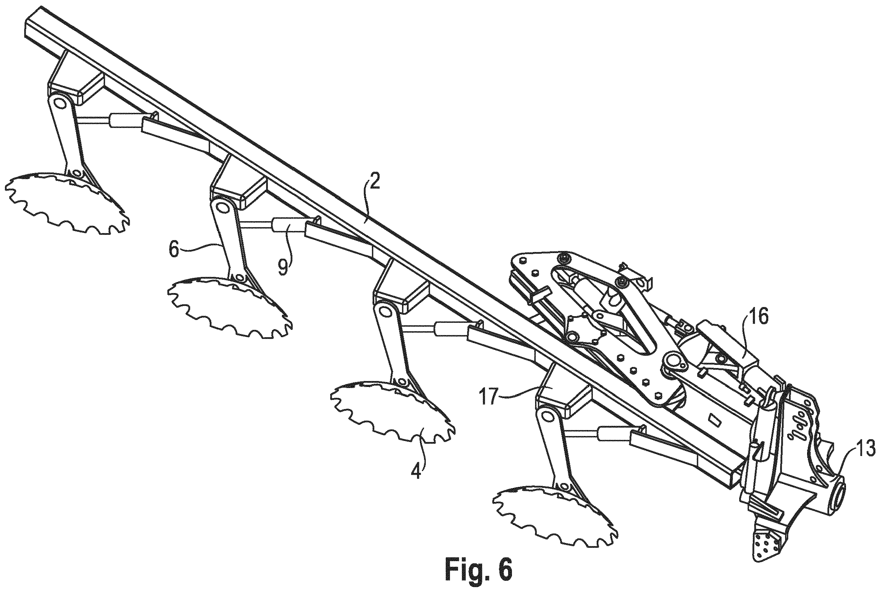

Figur 6 zeigt in dreidimensionaler Darstellung das Ausführungsbeispiel gemäß Figur 2, nämlich mit einer Verstellung der Schwenkarme 6 für die hohlscheibenartigen ersten Schneidelemente 4 mittels jeweiliger Hydraulikzylinder 9. Das bedeutet, jeder Schwenkarm 6 der hohlscheibenartigen ersten Schneidelemente 4 ist mit einem Hydraulikzylinder 9 verbunden, welcher auf einer Seite am Schwenkarm 6 und auf der gegenüberliegenden Seite am Pflugbaum 2 befestigt ist. Am fahrzeugseitigen Ende der Wende-Pflugvorrichtung 1 ist ein Pflugturmdrehwerk 13 angeordnet, mittels welchem über ein Hydraulik-Stellglied 16 die Wende- Pflugvorrichtung 1 um 180° drehbar ist, wenn eine Rückfurche gepflügt werden soll, sodass keine Dammbildung und keine Leerfurche, sondern ein gleichmäßiges Pflugbild auftritt. Der Einfachheit der Darstellung halber sind die messerartigen zweiten Schneidelemente 3 weggelassen. Je nach Schwenkposition, d.h. je nachdem, ob die jeweiligen hohlscheibenartigen ersten Schneidelemente 4 in der ersten Arbeitsposition oder in der zweiten Arbeitsposition sind, machen diese gemäß eben ihrer Schwenkposition entweder aus dem Halbmodul der unteren Reihe von messerartigen zweiten Schneidelementen 3 oder der oberen Reihe dieser zweiten Schneidelemente 3 zusammen mit dem ersten Schneidelement 4 ein Komplettmodul. Daher wird entgegen der Notwendigkeit bei einem herkömmlichen Wendepflug nur ein Satz von hohlscheibenartigen ersten Schneidelementen 4 vorgesehen, welcher zu den jeweiligen zweiten Schneidelementen 3 schwenkbar ist und dort aus einem Halbmodul jeweils dann nach erfolgter Schwenkung ein Komplettmodul erzeugt. Damit die Ebene, in welcher die Schwenkarme 6 bei ihrer Schwenkung rotieren, parallel zur Zugrichtung liegt, ist jeder Schwenkarm 6 mit dessen Schwenkachse an einem Lagerblock 17 befestigt, welcher am Pflugbaum 2 angelenkt ist und eine Schräge aufweist, deren Winkel identisch zur Auslenkung des Pflugbaumes 2 gegenüber der Zugrichtung ist.

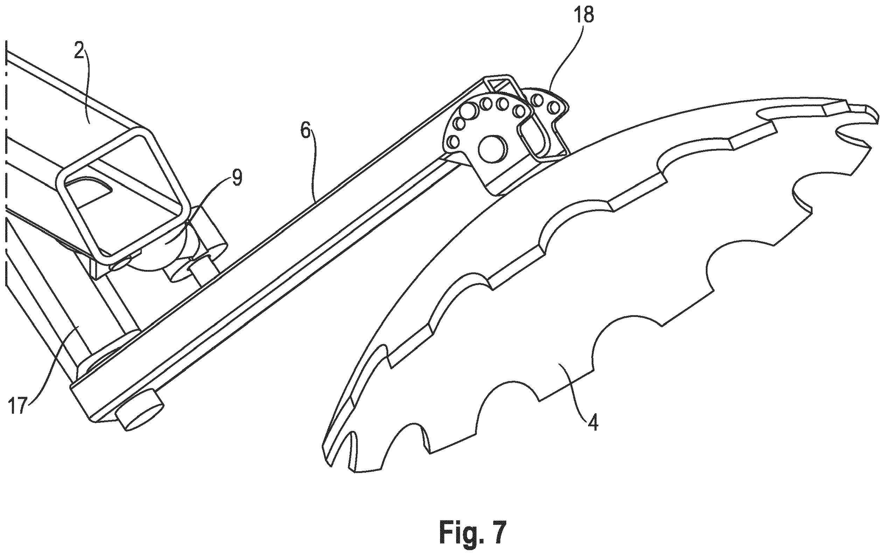

In Figur 7 ist in prinzipieller Darstellung eine Anordnung des hohlscheibenartigen ersten Schneidelementes 4 an der Wendepflugvorrichtung 1 dargestellt. Die Verschwenkung des hohlscheibenartigen ersten Schneidelementes 4 erfolgt über einen Hydraulikzylinder 9 gemäß zweitem Ausführungsbeispiel (siehe Figur 2). Der Schwenkarm 6 ist an seinem einen Ende mit dem Lagerblock 17 verbunden, über welchen die Schwenkachse realisiert ist. Zwischen der an einem Ende des Schwenkarmes 6 befindlichen Schwenkachse 14 und der Befestigung des hohlscheibenartigen ersten Schneidelementes 4 an dessen anderem Ende ist der Hydraulikzylinder 9 befestigt, welcher an dessen gegenüberliegendem Ende mit dem Pflugbaum 2 verbunden ist. An dem Ende des Schwenkarmes 6, an welchem das hohlscheibenartige erste Schneidelement 4 befestigt ist, ist ein Lochplattenelement 18 zur zusätzlichen Einstellung des Schnittwinkels 24 des ersten Schneidelementes 4 vorgesehen. Die Einstellung des Schnittwinkels 24 an beispielsweise veränderte Bodenverhältnisse kann dabei durch Befestigung eines Bolzens in einen jeweiligen Schwenkwinkel realisierende Löcher der Lochplatte vorgenommen werden.

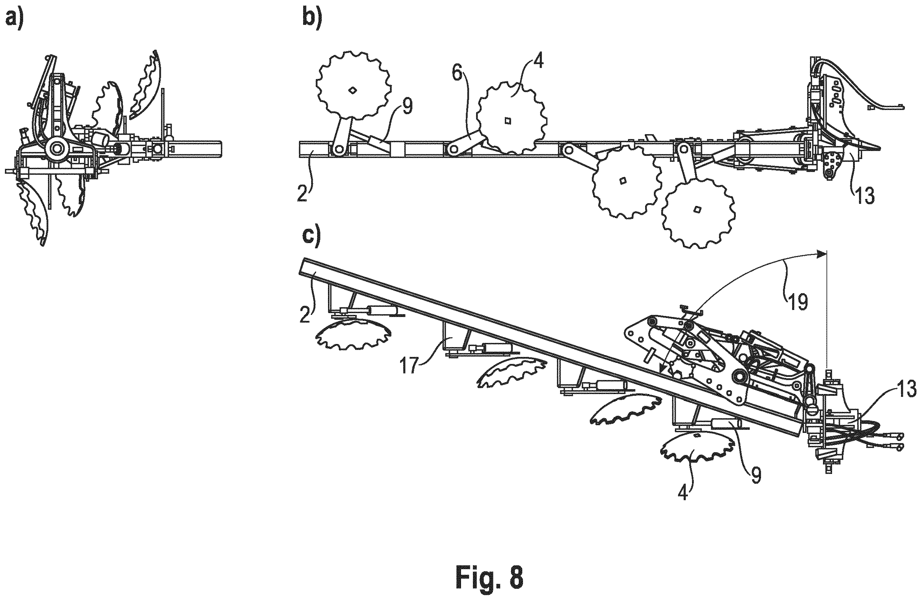

In Figur 8 sind eine Ansicht entgegen der Zugrichtung (a), eine Seitenansicht (b) und eine Draufsicht (c) gemäß der dreidimensionalen Darstellung nach Figur 6 gezeigt. Auch hier sind der Einfachheit der Darstellung wegen die messerartigen zweiten Schneidelemente 3, welche bezogen auf die Darstellung gemäß Figur 8b) an der Oberseite und an der Unterseite des Pflugbaumes 2 angeordnet sind, nicht gezeichnet. Mittels der drei verschiedenen Ansichten gemäß Figur 8 soll verdeutlicht werden, welche einzelnen Phasen bei einer Verschwenkung eines hohlscheibenartigen ersten Schneidelementes 4 aus der ersten Arbeitsposition, d.h. der Pflügposition (siehe Figur 8b), rechtes erstes Schneidelement), in welcher das erste Schneidelement 4 zusammen mit dem nicht dargestellten zweiten Schneidelement ein Komplettmodul bildet, über die verschiedenen Zwischenstellungen zu der zweiten Position (siehe Figur 8b), ganz links) verschwenkt wird. In der zweiten Position bildet das hohlscheibenartige erste Schneidelement 4 zusammen mit dem nicht dargestellten messerartigen zweiten Schneidelement 3 wieder ein Komplettmodul. Die einzelnen dargestellten Schwenkphasen beziehen sich gedanklich auf ein einziges erstes Schneidelement. Selbstverständlich beziehen sich die einzelnen Positionen, einschließlich der Zwischenpositionen, nicht auf Einstellungspositionen des hohlscheibenartigen ersten Schneidelementes 4 an der Wende-Pflugvorrichtung 1. Vielmehr müssen die einzelnen ersten Schneidelemente 4 in ihren jeweiligen Arbeitspositionen so angeordnet sein, dass sie zum Zwecke des Pflügens ein Komplettmodul mit dem jeweiligen zweiten Schneidelement 3 bilden. Figur 8c) stellt eine Draufsicht der Ansicht der verschiedenen Zwischenpositionen der Wende-Pflugvorrichtung 1 dar. Figur 8a) stellt eine Blickrichtung entgegen der Zuglinie dar und zeigt wiederum die verschiedenen Positionen des hohlscheibenartigen ersten Schneidelementes 4 beim Verschwenken aus der Arbeitsposition, d.h. der ersten Position, in die zweite Position, aus welcher die Wende-Pflugvorrichtung 1 noch mittels des Pflugturmdrehwerkes 13 um 180° gedreht werden muss, damit das mittels erstem und zweitem Schneidelement gebildete Komplettmodul die Rückfurche im Erdboden pflügen kann. In Figur 8c) ist des Weiteren der Holmwinkel 19 eingezeichnet, welcher den Komplementärwinkel zur Auslenkung des Pflugbaumes 2 bezüglich der Zugrichtung 5 (nicht eingezeichnet) darstellt.

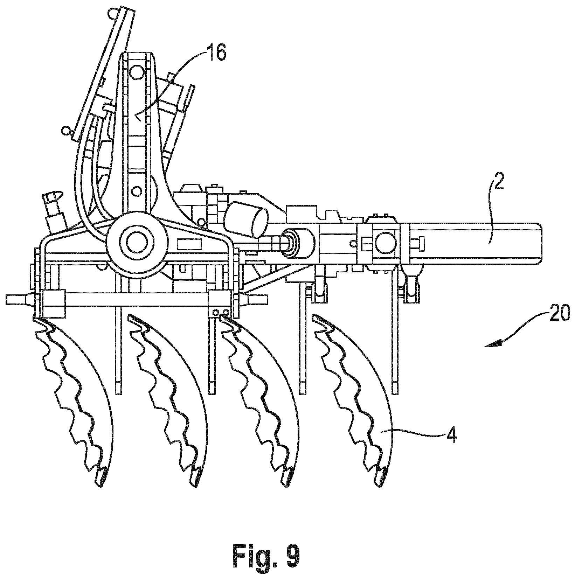

Figur 9 stellt eine prinzipielle Ansicht wie die gemäß Figur 8a) dar, allerdings mit allen hohlscheibenartigen ersten Schneidelementen 4 in der jeweiligen Arbeitsposition, d.h. in der Pflügposition, wobei auch bei dieser Ansicht der Einfachheit der Darstellung wegen die messerartigen zweiten Schneidelemente 3 nicht eingezeichnet sind.

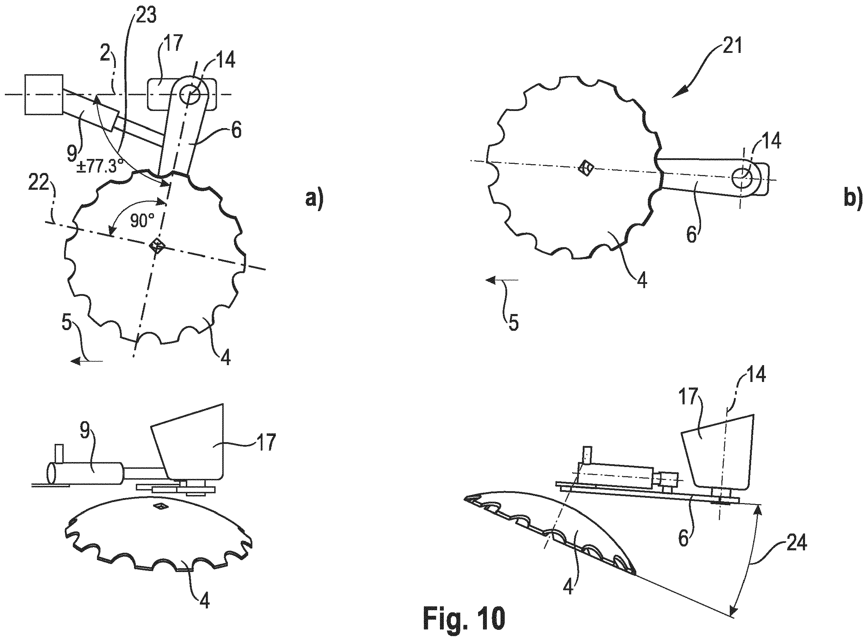

In Figur 10a), b) sind prinzipielle Winkelpositionen zur Einstellung wie auch zur Sicherung von gleichem Sturz- und Anschnittwinkel des mittels eines Hydraulikzylinders 9 über einen Schwenkarm 6 zu verschwenkenden hohlscheibenartigen ersten Schneidelementes 4 sowohl in Seitenansicht als auch in Draufsicht dargestellt. In Figur 10a) in der oben dargestellten Seitenansicht ist gezeigt, wie das hohlscheibenartige erste Schneidelement 4 über einen Schwenkarm 6 mittels eines Hydraulikzylinders 9, welcher am Schwenkarm 6 und am Pflugbaum 2 befestigt ist, welcher prinzipiell nur als Strich-Punkt-Linie dargestellt ist. Der Schwenkarm 6 ist über die Schwenkachse 14 mit dem Lagerblock 17 verbunden. Bei einer Verschwenkung, welche mittels des Hydraulikzylinders 9 bewirkt wird, wird das hohlscheibenartige erste Schneidelement 4 um seine Schwenkachse 14 in die jeweilige Position gebracht. Eingezeichnet ist des Weiteren die Pflügrichtung bzw. Zuglinie 5. Zu der in Pflügrichtung nach vorn geneigten Achse ist die Einstellachse 22 senkrecht dazu ebenfalls eingezeichnet. In der Figur 10a) unten angeordnet ist die Draufsicht der Anordnung. Für das Verständnis der erfindungsgemäßen Wende-Pflugvorrichtung 1 ist der Zusammenhang der Winkelveränderungen von sogenanntem Schnitt-Wendewinkel (Sturzwinkel) bei Drehung des Schwenkarmes 6 von 0° (waagerecht) nach 90° (senkrecht) von Bedeutung. In der Ausgangsposition des Schwenkarmes bei 0° (waagerecht) kann der Schnittwinkel zum Beispiel auf 20° eingestellt werden. Der komplementäre Wendewinkel (Sturz ist dabei 0°, d.h. senkrecht) ergibt sich, wenn der Schwenkarm 6 mit dem ersten Schneidelement 4 in Richtung auf 90° geschwenkt wird. Dann nimmt der Sturzwinkel zu, der Wendewinkel nimmt ab. Dabei gibt es einen Winkel, bei dem beide Winkel (Schnitt- und Sturzwinkel) gleich sind, wobei im Bereich vor Erreichen von 77,3° der Schnittwinkel überwiegt, wohingegen nach einem Winkel von 77,3° der Sturzwinkel überwiegt. Dieser Winkel von ± 77,3° wird auch als Grindelwinkel 23 bezeichnet. Wenn zum Beispiel in der waagerechten Ausgangsstellung der Schnittwinkel 20°, bezogen auf die Zuglinie des Schleppers, beträgt, so ist der Sturzwinkel 0°. Mit zunehmender Schwenkrichtung in Richtung 80° ergeben sich komplementär ein zunehmender Sturzwinkel und ein abnehmender Schnittwinkel, da die beiden Winkel sich gegenseitig bedingen.

Die Schwenkachsen 14 für die Schwenkarme 6 mit den hohlscheibenartigen ersten Schneidelementen sind 90° angebracht bzw. ausgerichtet, d.h. senkrecht zur Zuglinie, was der Fahrtrichtung des Schleppfahrzeuges entspricht. Damit muss die Ausrichtung der Hohlscheibe auf zum Beispiel 20° Schnittwinkel nur einmal vorgenommen werden. Die Einstellachse 22 dient nur zum Einstellen für den gleichen Schnitt- und Sturzwinkel auf beiden Seiten.

Figur 10b) zeigt die Neutralposition bezüglich der eingezeichneten Fahrtrichtung, welche eingestellt wird, d.h. die Verschwenkung der ersten Schneidelemente 4 wird zwischen der ersten Arbeitsposition und der zweiten Arbeitsposition etwa in der Mitte unterbrochen, nämlich etwa entlang der Ausrichtung des Pflugbaumes 2, was während des eigentlichen Wendevorgangs erfolgt. Die Neigung des hohlscheibenartigen ersten Schneidelementes 4 bezüglich der parallel zur Zugrichtung ausgerichteten Schwenkarme 6 ist als Schnittwinkel 24 in der Draufsicht der Darstellung gemäß Figur 10b) gezeichnet.

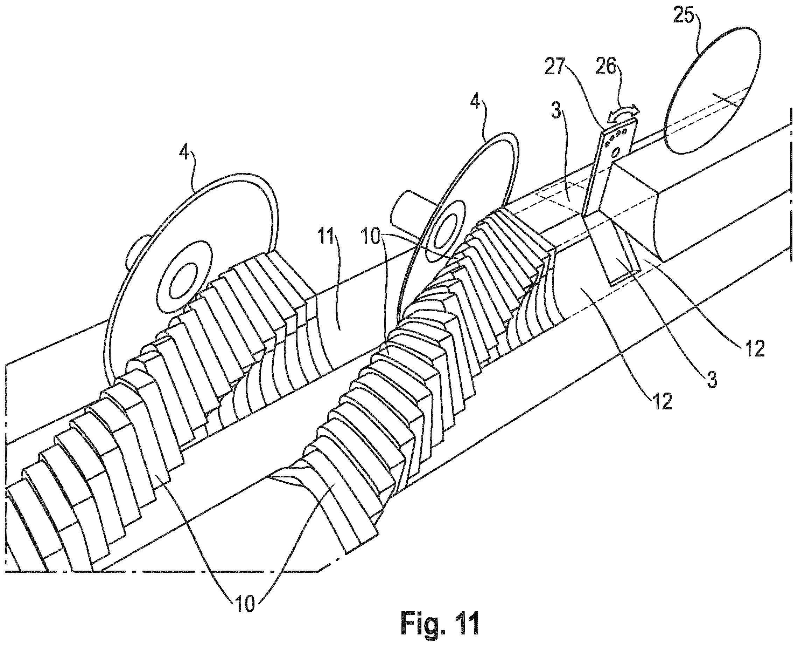

In Figur 11 ist eine prinzipielle Darstellung eines weiteren Ausführungsbeispiels gezeigt, bei welchem zur weiteren Reduzierung der Anzahl der zum Pflügen erforderlichen Elemente zwei hohlscheibenartige erste Schneidelemente 4 in Pflügrichtung 5 hintereinander angeordnet sind, welchen ein einziges messerartiges zweites Schneidelement 3 zugeordnet ist, dessen Ausbildung zwei messerartige Teil-Schneidelemente aufweist, welche von einer einstellbaren senkrechten Platte, und zwar mittels einer Lochplatte 27, eine Verstellung 26 des Anstellwinkels ermöglicht. Damit kann von einer Mittelposition aus nach beiden Seiten der Bodenbereich 12 des Erdbalkens 10 für die jeweilige, dieser Ausbildung der den messerartigen zweiten Schneidelementen 3 vorlaufenden und hintereinander angeordneten zwei hohlscheibenartigen ersten Schneidelemente 3 geschnitten werden. Beide hohlscheibenartigen Schneidelemente 3 trennen den Erdbalken von dessen Seitenbereich 11 und bewirken aufgrund ihrer hohlscheibenartigen Ausbildung gleichzeitig ein Wenden des Erdbalkens. Zur Nachlaufstabilisierung ist zusätzlich ein Scheibensech 25 in Pflügrichtung 5 nach dem messerartigen zweiten Schneidelement 3 vorgesehen. Dieses auch als zweiflügliges messerartiges zweites Schneidelement 3 bezeichnete, sozusagen zwei vorlaufenden hohlscheibenartigen ersten Schneidelementen dienende Schneidelement 3 wäre gesondert zu fertigen.

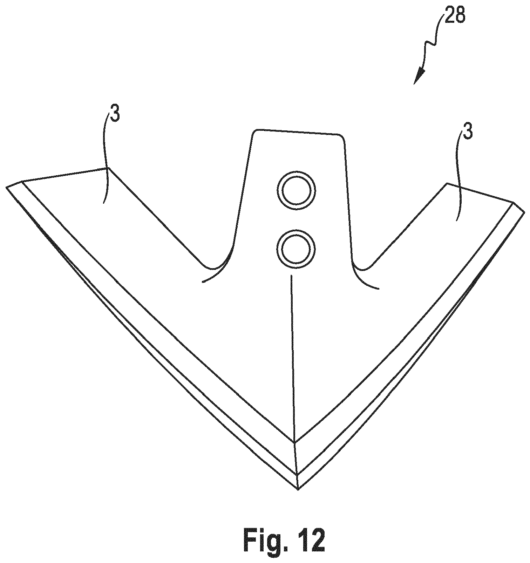

In Figur 12 ist eine sogenannte Gänsefußschar 28 dargestellt, welche anstelle eines zweiflüglig ausgebildeten zweiten Schneidelementes 3 eingesetzt werden kann. Eine derartige Gänsefußschar 28 ist handelsüblich und kann zu geringeren Kosten als ein zweiflügliges, speziell auszubildendes und herzustellendes zweites Schneidelement 3 gefertigt werden. Damit können quasi zwei Bodenbereiche 12 des Erdbalkens 12 geschnitten werden, und zwar die jeweiligen Bodenbereiche, die zu den zwei vorlaufenden hohlscheibenartigen ersten Schneidelementen 4 zugehörig sind.

### Bezugszeichenliste

- 1: Wende-Pflugvorrichtung
- 2: Pflugbaum
- 3: messerartiges zweites Schneidelement
- 4: hohlscheibenartiges erstes Schneidelement
- 5: Pflügrichtung
- 6: Schwenkarm
- 7: Erdboden
- 8: Gestänge
- 9: Hydraulikzylinder
- 10: Erdbalken
- 11: Seitenbereich Erdbalken
- 12: Bodenbereich Erdbalken
- 13: Pflugturmdrehwerk
- 14: Schwenkachse erstes Schneidelement
- 15: Schwenkbereich
- 16: Stellglied Pflugturmdrehwerk / Wende-Hydraulikzylinder
- 17: Lagerblock
- 18: Lochplatte Einstellung Schnittwinkel
- 19: Holmwinkel
- 20: Arbeitsposition
- 21: Neutralposition
- 22: Einstellachse
- 23: Grindelwinkel
- 24: Schnittwinkel
- 25: Scheibensech
- 26: Verstellung Anstellwinkel
- 27: Lochplatte zur Verstellung
- 28: Gänsefußschar

## Patentansprüche

1. Wende-Pflugvorrichtung (1) mit beidseitig eines Pflugbaumes (2) angeordneten messerartigen zweiten Schneidelementen (3), wobei zumindest ein einseitig hohlscheibenartig ausgebildetes, einen einstellbaren Schnittwinkel aufweisendes erstes Schneidelement (4) aus einer ersten Position auf einer ersten Seite des Pflugbaumes (2), in welcher es bezüglich der messerartigen, einen einstellbaren Anstellwinkel aufweisenden zweiten Schneidelemente (3) so angeordnet ist, dass jeweils ein zweites Schneidelement (3) und ein erstes Schneidelement (4) zusammen ein Komplettmodul zum Pflügen in einer Pflügrichtung (5) bilden, in eine zweite Position auf einer der ersten Seite des Pflugbaumes (2) gegenüberliegenden zweiten Seite mittels eines Schwenkarmes (6) schwenkbar sind, in welcher ein weiteres zweites Schneidelement (3) als Halbmodul jeweils nach umgeschwenktem ersten Schneidelement (4) ein Komplettmodul bildet, wobei das Komplettmodul auf der zweiten Seite zum Erdboden (7) derart wendbar ist, dass bei einer zur Pflügrichtung (5) entgegengesetzten Rückpflügrichtung der Erdboden (7) mit gleichem Sturz- und Schnittwinkel des ersten Schneidelementes (4) pflügbar ist.

2. Wende-Pflugvorrichtung (1) nach Anspruch 1, **dadurch gekennzeichnet, dass** mehrere hohlscheibenartige erste Schneidelemente (4) über ein Gestänge (8) miteinander verbunden sind und gleichzeitig mittels des jeweiligen Schwenkarmes (6) von der ersten in die zweite Position schwenkbar sind.

3. Wende-Pflugvorrichtung (1) nach Anspruch 1, **dadurch gekennzeichnet, dass** mehrere hohlscheibenartige erste Schneidelemente (4) mittels jeweiliger Hydraulikzylinder (9) von der ersten in die zweite Position einzeln winkelgleich schwenkbar sind.

4. Wende-Pflugvorrichtung (1) nach einem der Ansprüche 1 bis 3, **dadurch gekennzeichnet, dass** das erste Schneidelement (4) so ausgebildet ist, dass bei dessen Bewegung in Pflügrichtung (5) ein Seitenbereich (11) eines Erdbalkens (10) vom Boden schneidbar ist, und das zweite Schneidelement (4) derart ausgebildet ist, dass durch dessen Bewegung in Pflügrichtung (5) ein Bodenbereich (12) des Erdbalkens (10) schneidbar ist, wobei die von der ersten Seite des Pflugbaumes (2) zur zweiten Seite schwenkbaren ersten Schneidelemente (4) sowohl in der ersten Position als auch in der zweiten Position gleiche Schnitt- und Sturzwinkel aufweisen, wobei der Pflugbaum (2) zum Wenden um 180° um ein Pflugturmdrehwerk (13) drehbar ist.

5. Wende-Pflugvorrichtung (1) nach Anspruch 4, **dadurch gekennzeichnet, dass** bei einem Schwenken der Schwenkarme (6) von 77,3° aus der ersten in die zweite Position oder umgekehrt der Schnitt- und der Sturzwinkel gleich sind.

6. Wende-Pflugvorrichtung (1) nach einem der Ansprüche 1 bis 5, **dadurch gekennzeichnet, dass** der Schwenkarm (6) in einer gewünschten Position verriegelbar ist.

7. Wende-Pflugvorrichtung (1) nach einem der Ansprüche 1 bis 6, **dadurch gekennzeichnet, dass** die messerartigen zweiten Schneidelemente am Pflugbaum hinsichtlich ihres Schnittwinkels zur Tiefeneinzugssteuerung einstellbar sind, insbesondere mittels hydraulischer Stellglieder.

8. Wende-Pflugvorrichtung nach einem der Ansprüche 1 bis 6, **dadurch gekennzeichnet, dass** die messerartigen zweiten Schneidelemente (3) am Pflugbaum (2) befestigt und hinsichtlich ihres Schnittwinkels zur Tiefeneinzugsteuerung mechanisch einstellbar sind, insbesondere über eine Lochplatte mit Scherbolzen.

9. Wende-Pflugvorrichtung (1) nach einem der Ansprüche 1 bis 8, **dadurch gekennzeichnet, dass** die ersten Schneidelemente (4) in einer ersten Schwenkrichtung um 270 bis 300° um eine Schwenkachse (14) oder in einer zur ersten Schwenkrichtung entgegengesetzten zweiten Schwenkrichtung um 80° bis 100°, welche Schwenkachse (14) 90° zur Zuglinie der Pflugvorrichtung (1) angeordnet ist, schwenkbar sind.

10. Wende-Pflugvorrichtung (1) nach Anspruch 9, **dadurch gekennzeichnet, dass** die hohlscheibenartigen ersten Schneidelemente (4) in einer Ebene verschwenkbar sind.

11. Wende-Pflugvorrichtung (1) nach einem der Ansprüche 1 bis 10, **dadurch gekennzeichnet, dass** die ersten Schneidelemente (4) über einen Schwenkhebel verschwenkbar und in der jeweiligen Position verriegelbar sind.

12. Wende-Pflugvorrichtung (1) nach einem der Ansprüche 1 bis 11, **dadurch gekennzeichnet, dass** nur hinter jedem zweiten der ersten Schneidelemente (4) ein zweites Schneidelement (3) angeordnet ist.

## Claims

1. Rotatable ploughing device (1) with blade-like second cutting elements (3) arranged on both sides of a plough beam (2),
wherein at least one one-sided hollow disc-like first cutting element (4) having an adjustable cutting angle is pivotable from a first position on a first side of the plough beam (2), in which the first cutting element is arranged relative to the blade-like second cutting elements (3) with an adjustable angle of attack in such a way, that a second cutting element (3) and a first cutting element (4) each together form a complete module for ploughing in a ploughing direction (5), into a second position on a second side opposite the first side of the plough beam (2) by means of a pivot arm (6), in which each further second cutting element (3) as a half module forms a complete module after the first cutting element (4) has been pivoted over, wherein the complete module is able to be rotated on the second side towards the ground (7) such that the ground (7) can be ploughed with the same camber and cutting angle of the first cutting element (4) in a ploughing direction opposite to the return ploughing direction (5).

2. Rotatable ploughing device (1) according to claim 1, **characterized in that** a plurality of hollow disc-like first cutting elements (4) are connected to one another via a linkage (8) and can be pivoted simultaneously from the first position into the second one by means of the respective pivot arm (6).

3. Rotatable ploughing device (1) according to claim 1, **characterized in that** a plurality of hollow disc-like first cutting elements (4) can be pivoted individually about the same angle from the first position into the second one by means of respective hydraulic cylinders (9).

4. Rotatable ploughing device (1) according to one of claims 1 to 3, **characterized in that** the first cutting element (4) is designed such that when being moved in the ploughing direction (5) a side region (11) of an earth bar (10) can be cut from the ground, and the second cutting element (4) is designed such that by being moved in the ploughing direction a ground region (12) of the earth bar (10) is able to be cut wherein the first cutting elements (4), being able to be pivoted from the first side of the plough beam (2) to the second side, comprise the same cutting and camber angles both in the first position and in the second position, wherein the plough beam (2) can be rotated through 180° about a top link plough clevis (13) for turning.

5. Rotatable ploughing device (1) according to claim 4, **characterized in that** when pivoting the swivel arms (6) by 77.3° from the first position to the second one or vice versa, the cutting angle and the camber angle are equal.

6. Rotatable ploughing device (1) according to one of claims 1 to 5, **characterized in that** the swivel arm (6) is able to be locked in a desired position.

7. Rotatable ploughing device (1) according to one of claims 1 to 6, **characterized in that** the blade-like second cutting elements (3) on the plough beam (2) are adjustable with regard to their cutting angle for depth retraction control, in particular by means of hydraulic actuators.

8. Rotatable ploughing device (1) according to one of claims 1 to 6, **characterized in that** the blade-like second cutting elements (3) are attached to the plough beam (2) and are mechanically adjustable with regard to their cutting angle for depth retraction control, in particular via a perforated plate with shear bolts.

9. Rotatable ploughing device (1) according to one of claims 1 to 8, **characterized in that** the first cutting elements (4) are pivotable in a first pivoting direction by 270° to 300° about a pivot axis (14) or in a second pivoting direction opposite to the first pivoting direction by 80° to 100°, which pivot axis (14) is arranged at 90° to the pulling line of the ploughing device (1).

10. Rotatable ploughing device (1) according to claim 9, **characterized in that** the hollow disc-like first cutting elements (4) are pivotable in a plane.

11. Rotatable ploughing device (1) according to one of claims 1 to 10, **characterized in that** the first cutting elements (4) are pivotable via a pivoting lever and are able to be locked in the respective position.

12. Rotatable ploughing device (1) according to one of claims 1 to 11, **characterized in that** a second cutting element (3) is arranged only behind each second one of the first cutting elements (4).

## Revendications

1. Dispositif de charrue réversible (1) avec des deuxièmes éléments de coupe (3) en forme de lame agencés des deux côtés d'un arbre de charrue (2), au moins un premier élément de coupe (4) réalisé en forme de disque creux d'un côté, qui présente un angle de coupe réglable, pouvant pivoter à partir d'une première position sur un premier côté de l'arbre de charrue (2), dans laquelle il est agencé par rapport aux deuxièmes éléments de coupe (3) en forme de lame, présentant un angle d'attaque réglable, de telle sorte qu'un deuxième élément de coupe (3) et un premier élément de coupe (4) forment respectivement ensemble un module complet pour labourer dans une direction de labourage (5), vers une deuxième position sur un deuxième côté opposé au premier côté de l'arbre de charrue (2) au moyen d'un bras pivotant (6), dans laquelle un deuxième élément de coupe (3) supplémentaire forme en tant que demi-module un module complet respectivement après que le premier élément de coupe (4) a pivoté, le module complet pouvant être retourné sur le deuxième côté par rapport au sol (7) de telle sorte que, dans une direction de labourage en retour opposée à la direction de labourage (5), le sol (7) peut être labouré avec le même angle de carrossage et de coupe du premier élément de coupe (4).

2. Dispositif de charrue réversible (1) selon la revendication 1, **caractérisé en ce que** plusieurs premiers éléments de coupe (4) en forme de disques creux sont reliés entre eux par l'intermédiaire d'une tringlerie (8) et peuvent pivoter simultanément de la première à la deuxième position au moyen du bras pivotant (6) respectif.

3. Dispositif de charrue réversible (1) selon la revendication 1, **caractérisé en ce que** plusieurs premiers éléments de coupe (4) en forme de disque creux peuvent pivoter individuellement à angle égal de la première à la deuxième position au moyen de vérins hydrauliques respectifs (9).

4. Dispositif de charrue réversible (1) selon l'une quelconque des revendications 1 à 3, **caractérisé en ce que** le premier élément de coupe (4) est réalisé de telle sorte que, lors de son déplacement dans la direction de labourage (5), une zone latérale (11) d'une poutre de terre (10) peut être coupée du sol, et le deuxième élément de coupe (4) est réalisé de telle sorte, que par son déplacement dans la direction de labourage (5), une zone de fond (12) de la poutre de terre (10) peut être coupée, les premiers éléments de coupe (4) pouvant pivoter du premier côté de l'arbre de charrue (2) vers le deuxième côté présentant des angles de coupe et de carrossage identiques aussi bien dans la première position que dans la deuxième position, l'arbre de charrue (2) pouvant être tourné de 180° autour d'un mécanisme de rotation de tête de charrue (13) pour le retournement.

5. Dispositif de charrue réversible (1) selon la revendication 4, **caractérisé en ce que**, lorsque les bras pivotants (6) pivotent de 77,3° de la première à la deuxième position ou inversement, les angles de coupe et de carrossage sont égaux.

6. Dispositif de charrue réversible (1) selon l'une quelconque des revendications 1 à 5, **caractérisé en ce que** le bras pivotant (6) peut être verrouillé dans une position souhaitée.

7. Dispositif de charrue réversible (1) selon l'une quelconque des revendications 1 à 6, **caractérisé en ce que** les deuxièmes éléments de coupe en forme de lame sur l'arbre de charrue sont réglables en ce qui concerne leur angle de coupe pour le contrôle de la profondeur, notamment au moyen d'organes de réglage hydrauliques.

8. Dispositif de charrue réversible selon l'une quelconque des revendications 1 à 6, **caractérisé en ce que** les deuxièmes éléments de coupe (3) en forme de lame sont fixés à l'arbre de charrue (2) et sont réglables mécaniquement en ce qui concerne leur angle de coupe pour le contrôle de la profondeur, notamment par l'intermédiaire d'une plaque perforée avec des goujons de cisaillement.

9. Dispositif de charrue réversible (1) selon l'une quelconque des revendications 1 à 8, **caractérisé en ce que** les premiers éléments de coupe (4) peuvent pivoter dans une première direction de pivotement de 270 à 300° autour d'un axe de pivotement (14) ou dans une deuxième direction de pivotement opposée à la première direction de pivotement de 80° à 100°, lequel axe de pivotement (14) est agencé à 90° par rapport à la ligne de traction du dispositif de charrue (1).

10. Dispositif de charrue réversible (1) selon la revendication 9, **caractérisé en ce que** les premiers éléments de coupe (4) en forme de disque creux peuvent être pivotés dans un plan.

11. Dispositif de charrue réversible (1) selon l'une quelconque des revendications 1 à 10, **caractérisé en ce que** les premiers éléments de coupe (4) peuvent être pivotés par l'intermédiaire d'un levier pivotant et verrouillés dans la position respective.

12. Dispositif de charrue réversible (1) selon l'une quelconque des revendications 1 à 11, **caractérisé en ce qu'**un deuxième élément de coupe (3) est agencé uniquement derrière chaque deuxième des premiers éléments de coupe (4).
